# EUROPEAN PATENT APPLICATION

(11) **EP 3 677 586 A1**
(43) Date of publication of application: **08.07.2020**
(21) Application number: 18852486.2
(22) Date of filing: 28.08.2018
(51) Int. Cl.: C07F 7/21

(54) **METHOD FOR MANUFACTURING SILSESQUIOXANE COMPOUND**

(30) Priority: 28.08.2017 JP 2017163285
(71) Applicant: Hitachi Chemical Co., Ltd., Chiyoda-ku Tokyo 100-6606 (JP)
(72) Inventor: TANAKA Tooru, Tokyo 100-6606 (JP); UNNO Masafumi, Maebashi-shi Gunma 371-8510 (JP)
(74) Representative: Hoffmann Eitle
(86) International application number: PCT/JP2018/031655
(87) International publication number: WO 2019/044793

(57) **Abstract**

Provided is a method for manufacturing a silsesquioxane compound represented by general formula (III) shown below, the method having a step of reacting a compound represented by general formula (I) shown below and a compound represented by general formula (II) shown below. In general formulas (I) to (III): each of R¹ and R² independently represents a hydrogen atom, an alkyl group of 1 to 8 carbon atoms, an aryl group of 6 to 14 carbon atoms, an aminoalkyl group, an amino group-containing group, a nitrile group-containing group, a vinyl group-containing group, a (meth)acryloyl group-containing group, a chloro group-containing group, a bromo group-containing group, or a functional group containing a boron trifluoride-complexed amino group, each of R³ to R¹⁰ independently represents an alkyl group of 1 to 8 carbon atoms or an aryl group of 6 to 14 carbon atoms, and M represents at least one element selected from the group consisting of hydrogen, lithium, sodium and potassium.

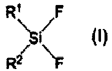

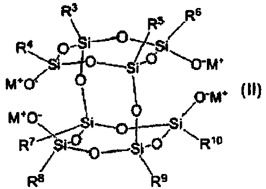

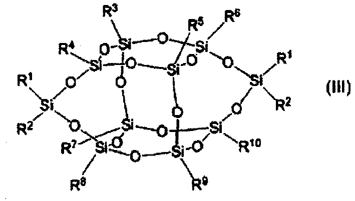

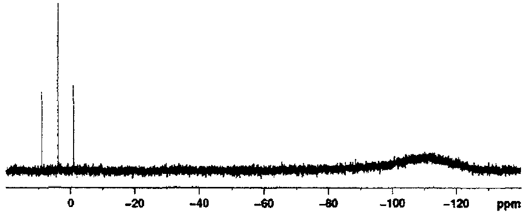

## Description

### TECHNICAL FIELD

One embodiment of the present invention relates to a method for manufacturing a silsesquioxane compound.

### BACKGROUND ART

Silsesquioxanes represented by (RSiO_{1.5})ₙ are known as compounds that can be obtained by subjecting an organosilicon compound having three hydrolyzable groups to hydrolysis followed by condensation. These compounds have a chemical structure that can also be said to exist between silicone resins and glass, and because they have excellent properties including heat resistance, transparency and weather resistance, they are attracting much attention as optical, semiconductor and electronic materials, with a large amount of research continuing to be reported.

Known structures for these silsesquioxanes include random structures with no specific structure, as well as double-decker structures, ladder structures and cage structures for which the structure can be determined. Although all of these structures have excellent properties, when used as a resin modifier, aggregation can sometimes occur in mixed resins, making it difficult to achieve the expected properties.

Accordingly, techniques have been developed for introducing a silsesquioxane into the main chain of a polymer to suppress aggregation. Patent Document 1 proposes a difunctional silsesquioxane that can be introduced into a main chain. Further, Patent Documents 2 and 3 propose the introduction of double-decker silsesquioxanes into the main chain.

### PATENT DOCUMENTS

Patent Document 1: JP 4379120 B
Patent Document 2: JP 4946169 B
Patent Document 3: JP 5082258 B

### SUMMARY OF THE INVENTION

### PROBLEMS TO BE SOLVED BY THE INVENTION

In these patent documents, the double-decker silsesquioxanes are synthesized by a reaction between a precursor and a chlorosilane. However, chlorosilanes suffer from problems of poor handling, and react with water to instantly form hydrogen chloride.

### MEANS TO SOLVE THE PROBLEMS

Specific aspects for addressing the above problems are as follows.
[1] A method for manufacturing a silsesquioxane compound represented by general formula (III) shown below, the method comprising a step of reacting a compound represented by general formula (I) shown below and a compound represented by general formula (II) shown below. 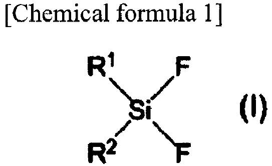
   [In general formula (I), each of R¹ and R² independently represents a hydrogen atom, an alkyl group of 1 to 8 carbon atoms, an aryl group of 6 to 14 carbon atoms, an aminoalkyl group, an amino group-containing group, a nitrile group-containing group, a vinyl group-containing group, a (meth)acryloyl group-containing group, a chloro group-containing group, a bromo group-containing group, or a functional group containing a boron trifluoride-complexed amino group. 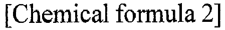 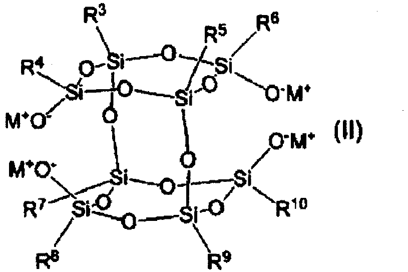
   [In general formula (II), each of R³ to R¹⁰ independently represents an alkyl group of 1 to 8 carbon atoms or an aryl group of 6 to 14 carbon atoms, and M represents at least one element selected from the group consisting of hydrogen, lithium, sodium and potassium. 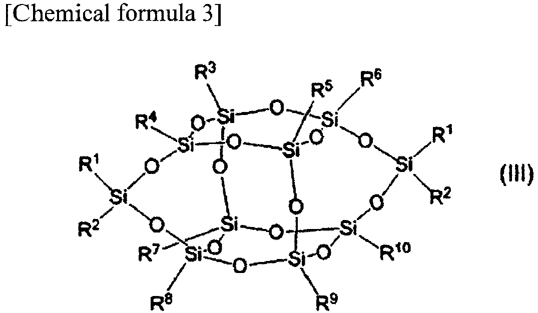
   [In general formula (III), each of R¹ and R² independently represents a hydrogen atom, an alkyl group of 1 to 8 carbon atoms, an aryl group of 6 to 14 carbon atoms, an aminoalkyl group, an amino group-containing group, a nitrile group-containing group, a vinyl group-containing group, a (meth)acryloyl group-containing group, a chloro group-containing group, a bromo group-containing group, or a functional group containing a boron trifluoride-complexed amino group, and each of R³ to R¹⁰ independently represents an alkyl group of 1 to 8 carbon atoms or an aryl group of 6 to 14 carbon atoms.]
[2] The method for manufacturing a silsesquioxane according to [1], including a step of manufacturing the compound represented by the general formula (I) using a compound represented by general formula (IV) shown below. 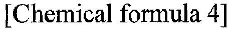 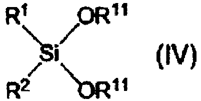
   [In general formula (IV), each of R¹ and R² is independently the same as defined for general formula (I), and R¹¹ represents an alkyl group of 1 to 8 carbon atoms.]
[3] The method for manufacturing a silsesquioxane according to [1] or [2], wherein in the general formula (II), M represents at least one element selected from the group consisting of lithium, sodium and potassium.
[4] The method for manufacturing a silsesquioxane according to any one of [1] to [3], wherein in the general formula (I), each of R¹ and R² independently represents an alkyl group of 1 to 8 carbon atoms, an aminoalkyl group, or a functional group containing a boron trifluoride-complexed amino group, and at least one of R¹ and R² is an aminoalkyl group or a functional group containing a boron trifluoride-complexed amino group.
[5] The method for manufacturing a silsesquioxane according to [4], wherein in the general formula (I), at least one of R¹ and R² is a 3-aminopropyl group, an N-2-(aminoethyl)-3-aminopropyl group, an N-phenyl-3-aminopropyl group, or a functional group containing a boron trifluoride-complexed amino group.
[6] The method for manufacturing a silsesquioxane according to any one of [1] to [5], wherein in the general formula (II), R³ to R¹⁰ are aryl groups of 6 to 8 carbon atoms.

### EFFECTS OF THE INVENTION

One embodiment of the present invention enables synthesis of a double-decker silsesquioxane compound that can be introduced into a main chain simply and at low cost.

### BRIEF DESCRIPTION OF THE DRAWINGS

FIG. 1 is a graph illustrating the ²⁹Si NMR spectrum of a compound represented by general formula (Y1) obtained in the examples.
FIG. 2A is a graph illustrating the ²⁹Si NMR spectrum of a compound represented by general formula (Z1) obtained in the examples.
FIG. 2B is a partially expanded view of FIG. 2A.
FIG. 3 is a graph illustrating the ²⁹Si NMR spectrum of a compound represented by general formula (Y2) obtained in the examples.
FIG. 4 is a graph illustrating the ²⁹Si NMR spectrum of a compound represented by general formula (Z2) obtained in the examples.
FIG. 5 is a graph illustrating the ²⁹Si NMR spectrum of a compound represented by general formula (Y3) obtained in the examples.
FIG. 6 is a graph illustrating the ²⁹Si NMR spectrum of a compound represented by general formula (Z3) obtained in the examples.
FIG. 7 is a graph illustrating the ²⁹Si NMR spectrum of a compound represented by general formula (Y4) obtained in the examples.
FIG. 8A is a graph illustrating the ²⁹Si NMR spectrum of a compound represented by general formula (Z4) obtained in the examples.
FIG. 8B is a partially expanded view of FIG. 8A.

### EMBODIMENTS FOR CARRYING OUT THE INVENTION

Embodiments of the present invention are described below, but the present invention is in no way limited by the following examples.

A method for manufacturing a silsesquioxane compound represented by general formula (III) has a step of reacting a compound represented by general formula (I) (hereafter also referred to as a difluorosilane) and a compound represented by general formula (II) (hereafter also referred to as a silsesquioxane precursor).

### [Difluorosilane]

The difluorosilane according to one embodiment has a structure represented by general formula (I) shown below.

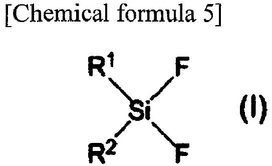

In general formula (I), each of R¹ and R² independently represents a hydrogen atom, an alkyl group of 1 to 8 carbon atoms, an aryl group of 6 to 14 carbon atoms, an aminoalkyl group, an amino group-containing group, a nitrile group-containing group, a vinyl group-containing group, a (meth)acryloyl group-containing group, a chloro group-containing group, a bromo group-containing group, or a functional group containing a boron trifluoride-complexed amino group. R¹ and R² may be the same or different.

Alkyl groups represented by R¹ and R² preferably have 1 to 8 carbon atoms and more preferably 1 to 4 carbon atoms, may be linear or branched, and may be acyclic or cyclic. Examples include a methyl group, ethyl group, propyl group, isopropyl group, n-butyl group, tert-butyl group, sec-butyl group and iso-butyl group.

Aryl groups represented by R¹ and R² preferably have 6 to 14 carbon atoms, and more preferably 6 to 8 carbon atoms. Within this range for the number of carbon atoms, the aryl group may have an alkyl group with a linear or branched chain bonded to at least one of the carbon atoms that form the carbon ring.

Examples of the aryl group include a phenyl group and a benzyl group.

Each alkyl group and aryl group may be unsubstituted or may have a substituent. A polymerizable group such as a carbon-carbon double bond, vinyl group or (meth)acryloyl group, or a reactive group such as a hydroxyl group or amino group may be introduced into the alkyl group or aryl group. This enables a polymerizable group or reactive group to be introduced into the polysesquioxane compound as a portion of an alkyl groups or aryl group, meaning the polysesquioxane compound can be provided favorably as a polymerizable compound.

Aminoalkyl groups represented by R¹ and R² preferably have an alkyl group portion of 1 to 8 carbon atoms, and particularly preferably 1 to 4 carbon atoms, and an amino group portion. For example, the aminoalkyl group is preferably a group represented by R"-NH-R'- (wherein R' represents an alkylene group of 1 to 8 carbon atoms, and R" represents a hydrogen atom, an alkyl group, an aryl group, or an aminoalkyl group). Specific examples include a 3-aminopropyl group, N-2-(aminoethyl)-3-aminopropyl group, and N-phenyl-3-aminopropyl group.

In general formula (I), the amino group-containing group, nitrile group-containing group, vinyl group-containing group, (meth)acryloyl group-containing group, chloro group-containing group or bromo group-containing group may be an amino group, nitrile group, vinyl group, (meth)acryloyl group, chloro group or bromo group respectively, or may be a monovalent organic group having one functional group or two or more functional groups selected from among these functional groups. For example, an alkyl group or aryl group having one functional group or two or more functional groups selected from among these functional groups can be used favorably. Among the various possibilities, an amino group-containing group, nitrile group-containing group, (meth)acryloyl group-containing group or chloro group-containing group is preferred.

Specific examples of amino group-containing groups include an N-(2-aminoethyl)-3-aminopropyl group and a 3-aminopropyl group. Specific examples of nitrile group-containing groups include a 2-cyanoethyl group and a 3-cyanopropyl group. Specific examples of (meth)acryloyl group-containing groups include a 3-methacryloxypropyl group and a 3-acryloxypropyl group. Specific examples of chloro group-containing groups include a chloromethyl group and a 3-chloropropyl group.

The functional group containing a boron trifluoride-complexed amino group is a functional group obtained by complexing the amino group of a functional group containing an amino group with boron trifluoride. Examples of the functional group containing an amino group include an amino group, and the aminoalkyl groups and amino group-containing groups described above.

A functional group in which boron trifluoride is coordinated to an amino group or the amino group of an alkylamino group can be used favorably.

### [Silsesquioxane Precursor]

A silsesquioxane precursor according to one embodiment has a structure represented by general formula (II) shown below.

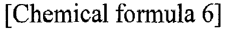

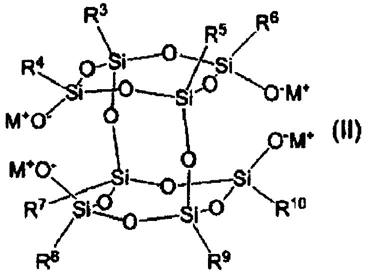

In general formula (II), each of R³ to R¹⁰ independently represents an alkyl group or an aryl group, and preferably represents an alkyl group of 1 to 8 carbon atoms or an aryl group of 6 to 14 carbon atoms. A substituted or unsubstituted aryl group of 6 to 8 carbon atoms is more preferred, and among such groups, a phenyl group can be used particularly favorably. R³ to R¹⁰ may all be the same, or may be partially or completely different from each other.

In general formula (II), M is preferably at least one element selected from the group consisting of hydrogen, lithium, sodium and potassium. From the viewpoint of suppressing the generation of hydrogen fluoride as a highly toxic reaction by-product, and instead generating a metal fluoride of low toxicity as a by-product, at least one element selected from the group consisting of lithium, sodium and potassium is more preferred.

### [Silsesquioxane Compound]

A silsesquioxane according to one embodiment has a structure represented by general formula (III) shown below.

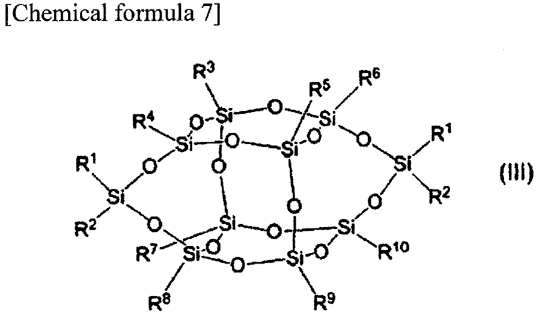

In general formula (III), each of R¹ and R² independently represents a hydrogen atom, an alkyl group of 1 to 8 carbon atoms, an aryl group of 6 to 14 carbon atoms, an aminoalkyl group, an amino group-containing group, a nitrile group-containing group, a vinyl group-containing group, a (meth)acryloyl group-containing group, a chloro group-containing group, a bromo group-containing group, or a functional group containing a boron trifluoride-complexed amino group, and each of R³ to R¹⁰ independently represents an alkyl group of 1 to 8 carbon atoms or an aryl group of 6 to 14 carbon atoms.

In general formula (III), R¹ and R² are introduced functional groups derived from R¹ and R² in the above general formula (I), and details relating to these groups are as described above for R¹ and R² in general formula (I).

In general formula (III), R³ to R¹⁰ are introduced functional groups derived from R³ to R¹⁰ in the above general formula (II), and details relating to these groups are as described above for R³ to R¹⁰ in general formula (II).

In general formula (III), R¹ and R² may be the same or different. In those cases where R¹ and R² are mutually different, the silsesquioxane precursor may be provided as a mixture of two geometrical isomers.

### [Method for Manufacturing Compound Represented by General Formula (III)]

One example of a method for manufacturing a silsesquioxane compound represented by general formula (III) is described below.

In a reaction between a fluorosilane and Si-O⁻M⁺, a siloxane linkage Si-O-Si is formed. One example of synthesizing a cage silsesquioxane using this reaction is described in a Non-Patent Document (Angew. Chem. Int. Ed. 2016, 55, 9336 to 9339).

The method for manufacturing a silsesquioxane compound represented by general formula (III) preferably includes a step of reacting a difluorosilane represented by general formula (I) and a silsesquioxane precursor represented by general formula (II).

The step of reacting a difluorosilane represented by general formula (I) and a silsesquioxane precursor represented by general formula (II) is preferably conducted in a solvent. There are no particular limitations on the solvent used, but specific examples include toluene, ethylbenzene, xylene, hexane, heptane, methyl ethyl ketone, methyl isobutyl ketone, cyclopentanone, tetrahydrofuran, propylene glycol monomethyl ether acetate, ethyl acetate, isobutyl acetate, diethyl ether, acetone, acetonitrile, methanol, ethanol, 2-propanol, 1-butanol and 2-butanol. A single solvent may be used alone, or a mixture of these solvents may be used.

There are no particular limitations on the temperature during the step of reacting a difluorosilane represented by general formula (I) and a silsesquioxane precursor represented by general formula (II), but the reaction is preferably performed within a range from -78°C to 30°C that can be achieved by cooling with dry ice.

In the step of reacting a difluorosilane represented by general formula (I) and a silsesquioxane precursor represented by general formula (II), the presence of a trace amount of water presents no particular problems. Further, there are no particular limitations on the reaction atmosphere, and the reaction may be performed under nitrogen or under normal atmospheric conditions.

### [Method for Manufacturing Difluorosilane Represented by General Formula (I)]

The method for manufacturing a difluorosilane represented by general formula (I) preferably includes a step of performing manufacture using a compound represented by general formula (IV) shown below.

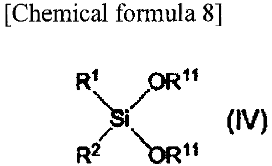

In the compound represented by general formula (IV), each of R¹ and R² is independently the same as defined for general formula (I), and R¹¹ is preferably an alkyl group of 1 to 8 carbon atoms. R¹¹ is more preferably an alkyl group of 1 to 4 carbon atoms, and may have a linear or branched chain. Examples include a methyl group, ethyl group, propyl group, isopropyl group, n-butyl group, tert-butyl group, sec-butyl group and iso-butyl group.

Examples of the compound represented by general formula (IV) include 3-aminopropylmethyldiethoxysilane, diphenyldimethoxysilane, 3-methacryloxypropylmethyldimethoxysilane, and dimethoxymethylvinylsilane.

A boron trifluoride complex is preferred as the reagent used in the step of manufacturing a difluorosilane represented by general formula (I) using a compound represented by general formula (IV). Specific examples include trifluoroborane dimethyl ether complex, trifluoroborane diethyl ether complex, trifluoroborane monoethylamine complex, trifluoroborane dibutyl ether complex, trifluoroborane phenol complex, trifluoroborane tetrahydrofuran complex, and trifluoroborane piperidine complex.

By conducting a reaction of the compound represented by general formula (IV) in the presence of a boron trifluoride complex, the alkoxy group bond of the compound represented by general formula (IV) can be broken, promoting the introduction of a fluoro group. Moreover, in those cases where a compound is used that has an amino group in at least one of R¹ and R² in general formula (IV), not only is a fluoro group introduced, but at least one of R¹ and R² is observed as a boron trifluoride-complexed amino group in the compound represented by general formula (I).

A solvent need not necessarily be used in the step of manufacturing a difluorosilane represented by general formula (I) using a compound represented by general formula (IV). In those cases where a solvent is used, specific examples of the solvent include toluene, ethylbenzene, xylene, hexane, heptane, methyl ethyl ketone, methyl isobutyl ketone, cyclopentanone, tetrahydrofuran, propylene glycol monomethyl ether acetate, ethyl acetate, isobutyl acetate, diethyl ether, acetone, acetonitrile, methanol, ethanol, 2-propanol, 1-butanol and 2-butanol. A single solvent may be used alone, or a mixture of these solvents may be used.

There are no particular limitations on the temperature during the step of manufacturing a difluorosilane represented by general formula (I) using a compound represented by general formula (IV), but the reaction is preferably performed within a range from room temperature to 200°C, with heating being performed as required.

[Method for Manufacturing Silsesquioxane Precursor Represented by General Formula (II)]

The silsesquioxane precursor represented by general formula (II) can be obtained by hydrolyzing and condensing an organic silane compound having three hydrolyzable groups.

For example, by reacting an organic silane compound having three hydrolyzable groups with a base represented by X(OH), a compound represented by general formula (II) can be obtained. Here, X represents a monovalent metal element.

In one example, the compound represented by general formula (II) can be manufactured using the compounds represented by general formula (V) shown below.

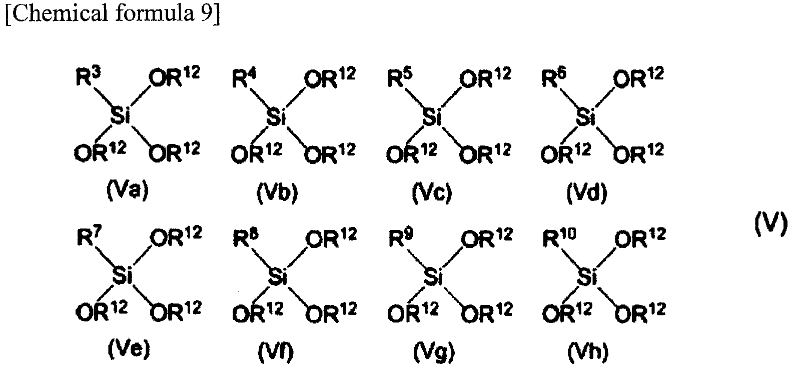

In general formula (V), each of R³ to R¹⁰ independently represents an alkyl group or an aryl group , and R¹² represents an alkyl group.

R³ to R¹⁰ in general formula (V) are introduced as R³ to R¹⁰ in general formula (II). Details are as described above in relation to general formula (II).

In general formula (V), R¹² is preferably an alkyl group of 1 to 8 carbon atoms, and more preferably an alkyl group of 1 to 4 carbon atoms. Specific examples include a methyl group, ethyl group, propyl group, isopropyl group, n-butyl group, tert-butyl group, sec-butyl group and isobutyl group.

In those cases where the compound represented by general formula (V) is produced from a compound represented by general formula (II), a base may be used to accelerate the reaction. There are no particular limitations on the base, and a basic compound represented by X(OH) may be used, with specific examples including lithium hydroxide, sodium hydroxide and potassium hydroxide.

### EXAMPLES

The present invention is described below in further detail using a series of examples, but the present invention is not limited to these examples.

The structure and purity of each obtained compound was determined as required using NMR techniques such as ¹H NMR, ¹³C NMR, ²⁹Si NMR and ¹⁹F NMR. The measurement conditions were as follows.

### (¹H NMR)

Apparatus: Avance 300 (manufactured by Bruker Corporation)
Observed nucleus: 1H
Resonance frequency: 300 MHz
Measurement temperature: 25°C

### (¹³C NMR)

Apparatus: Avance 300 (manufactured by Bruker Corporation)
Observed nucleus: 1H
Resonance frequency: 75 MHz
Measurement temperature: 25°C

### (²⁹Si NMR)

Apparatus: Avance 300 (manufactured by Bruker Corporation)
Resonance frequency: 60 MHz
Measurement temperature: 25°C

### (¹⁹F NMR)

Apparatus: Avance 300 (manufactured by Bruker Corporation)
Resonance frequency: 282 MHz
Measurement temperature: 25°C

Elemental analysis was conducted using a fully automatic elemental analyzer, by accurately weighing the sample to 0.0001 mg, and then performing simultaneous analysis of the CHN content.

System: vario MICRO cube (manufactured by Elementar Analysensysteme GmbH)
Combustion furnace: 1,150°C
Reducing furnace: 850°C
Helium flow rate: 200 ml/min
Oxygen flow rate: 25 to 30 ml/min

### [Synthesis of Compound Represented by Structural Formula (Z1)]

### (Synthesis of Compound Represented by Structural Formula (X))

A compound represented by the structural formula (X) shown below was synthesized using the following procedure. In the structural formula (X), C₆H₅ indicates a phenyl group (this also applies in each subsequent formula). Components for which there are no particular descriptions used reagents manufactured by Wako Pure Chemical Industries, Ltd., and components of the same label employed the same component through all of the examples (this also applies below).

A 200 mL round-bottom flask was charged with 3.21 g of ground sodium hydroxide, 2.50 g of purified water and 94.18 g of 2-propanol. With the mixture undergo vigorous stirring with a magnetic stirrer, 24.01 g of phenyltrimethoxysilane (KBM-103, manufactured by Shin-Etsu Chemical Co., Ltd.) was added gradually in a dropwise manner. Under a nitrogen atmosphere, the flask was heated in an oil bath until the solvent reached reflux temperature, stirring under heat was then continued for 4 hours, and the reaction mixture was then left to stand overnight. The produced white precipitate was filtered using a Hirsch funnel, and the solid was washed with 2-propanol and then dried under reduced pressure at 70°C, yielding 4.05 g of a white powdery solid.

### [Chemical formula 10]

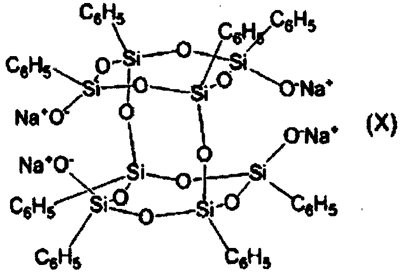

### (Synthesis of Compound Represented by Structural Formula (Y1))

A compound represented by the structural formula (Y1) shown below was synthesized using the following procedure.

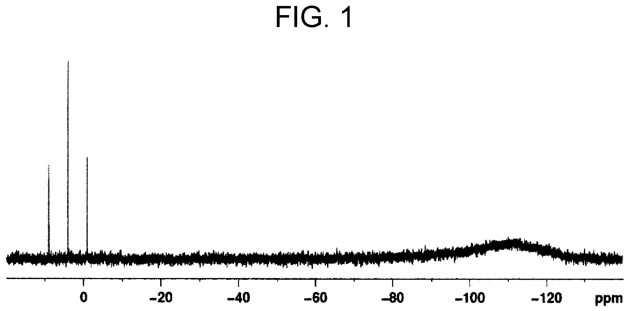

A 25 mL round-bottom flask was charged with 8.47 g of 3-aminopropylmethyldiethoxysilane (KBE-902, manufactured by Shin-Etsu Chemical Co., Ltd.) and 25.15 g of trifluoroborane diethyl ether complex (manufactured by Wako Pure Chemical Industries, Ltd.), and the mixture was stirred using a magnetic stirrer. After stirring for 24 hours, the flask was heated to 140°C using an oil bath, and the volatile fraction was removed by distillation under reduced pressure, yielding 8.90 g of a white solid. The structure of the compound represented by the structural formula (Y1) was determined by NMR. The ²⁹Si NMR spectrum of this compound is shown in FIG. 1.

¹H NMR (300 MHz, acetone-d₆) δ = 5.58 (br, 2H), 2.92 (m, 2H), 1.90 (m, 2H), 0.99 (m, 2H), 0.39 (t, 3H). ¹³C NMR (75 MHz, acetone-d₆) δ = 44.66, 22.03, 11.550, - 4.01. ²⁹Si NMR (60 MHz, acetone-d₆) δ = 4.04 (t). ¹⁹F NMR (282 MHz, acetone-d₆) δ = - 136.11, -51.78 (m).

Elemental analysis: C 23.11% (theoretical value 23.21%), H 5.29% (theoretical value 5.36%), N 6.69% (theoretical value 6.77%).

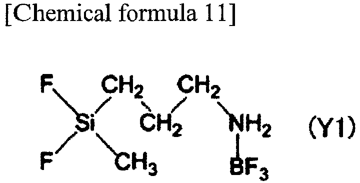

### (Synthesis of Compound Represented by Structural Formula (Z1))

A compound represented by the structural formula (Z1) shown below was synthesized using the following procedure.

A 200 mL three-neck flask was fitted with a dropping funnel and a nitrogen inlet, the flask was then charged with 5.01 g of the compound represented by the above structural formula (X), and the atmosphere inside the flask was flushed with nitrogen. When 100 mL of tetrahydrofuran (anhydrous, manufactured by Wako Pure Chemical Industries, Ltd., this also applies to subsequent mentions of tetrahydrofuran) was added and stirred, a white suspension was obtained. The flask was then cooled to 0°C in an ice bath. A separate 100 mL two-neck flask was fitted with a septum rubber and a nitrogen inlet, the flask was then charged with 1.65 g of the compound represented by the above structural formula (Y), and the atmosphere inside the flask was flushed with nitrogen. When 50 mL of tetrahydrofuran was added and stirred, a colorless transparent solution was obtained. This solution was extracted using a syringe, transferred to the dropping funnel, and then added gradually over a period of 20 minutes to the white suspension mentioned above. Stirring was then continued for three hours at 0°C, and when the ice bath was then removed and stirring was continued until the temperature gradually returned to room temperature, a transparent solution was obtained. This solution was transferred to a round-bottom flask, the solvent was removed by distillation using a rotary evaporator, and drying was then performed under reduced pressure using an oil pump, thus obtaining 6.33 g of a white solid. Subsequently, 25 mL of ethyl acetate was added to this solid, and a fractionation-purification was performed using a medium-pressure column (universal column AMINO column (4 L size) manufactured by Yamazen Corporation), using ethyl acetate as the eluent, yielding 1.99 g of a white solid.

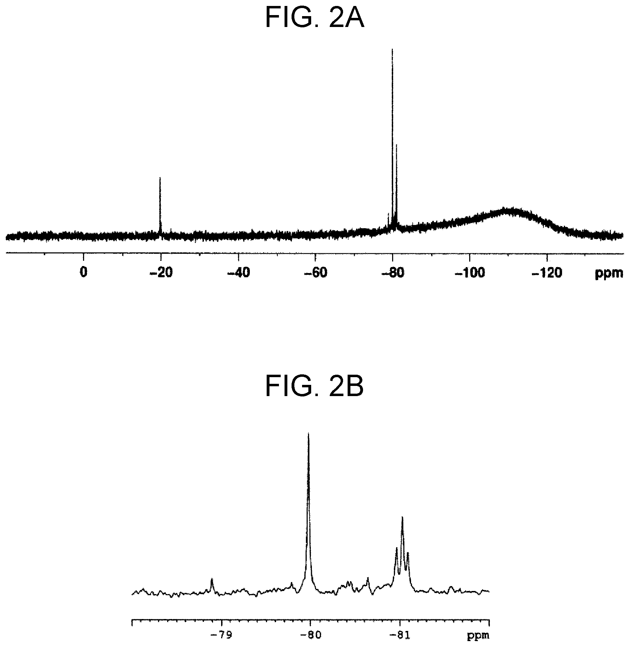

This white solid was composed of compounds represented by structural formulas (Z1a) and (Z1b), and the fact that these compounds represented by structural formulas (Z1a) and (Z1b) represented a mixture of two geometrical isomers was determined by NMR. The presumed structures of the isomers are shown below. Further, the ²⁹Si NMR spectrum of these compounds is shown in FIG. 2.

¹H NMR (300 MHz, tetrahydrofuran-d₈) δ = 7.80 to 7.20 (m, 40H), 5.50 (m, 4H), 2.89 (m, 4H), 1.80 (m, 4H), 1.03 (m, 4H), 0.44 (m, 6H). ¹³C NMR (75 MHz, tetrahydrofuran-d₈) δ = 135.06, 132.90, 131.94, 131.77, 129.16, 129.06, 129.01, 128.95, 128.90, 45.54, 23.51, 14.88, -0.70. ²⁹Si NMR (60 MHz, tetrahydrofuran-d₈) δ = -19.86, - 80.01, -80.92, -81.01, -81.12. ¹⁹F NMR (282 MHz, tetrahydrofuran-d₈) δ = -155.75 (m).

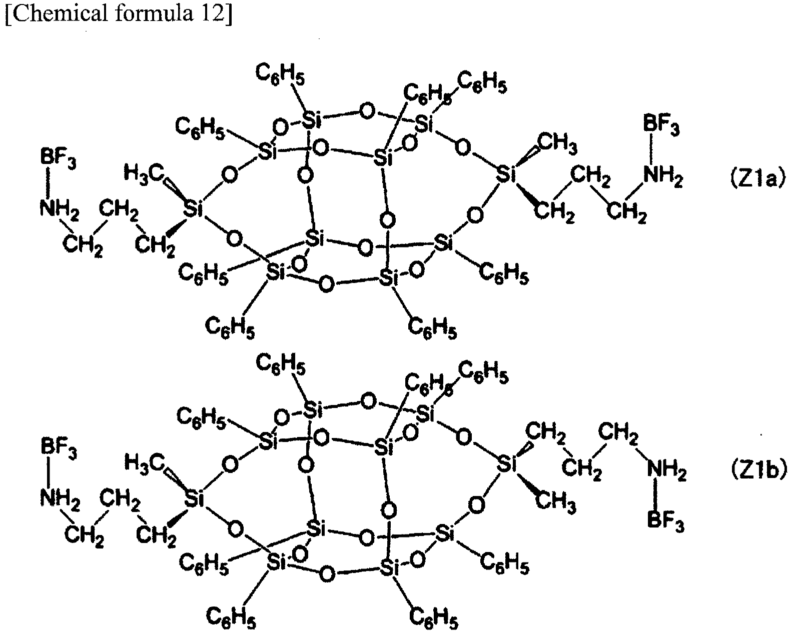

### [Synthesis of Compound Represented by Structural Formula (Z2)]

### (Synthesis of Compound Represented by Structural Formula (Y2))

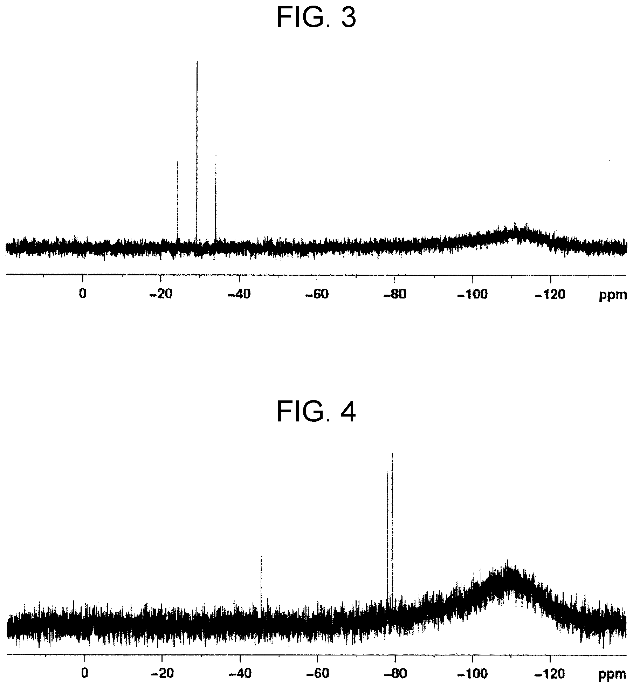

A 50 mL round-bottom flask was charged with 15.10 g of diphenyldimethoxysilane (KBM-202SS, manufactured by Shin-Etsu Chemical Co., Ltd.) and 5.80 g of trifluoroborane diethyl ether complex (manufactured by Wako Pure Chemical Industries, Ltd.), and the mixture was stirred with a magnetic stirrer. After stirring for 24 hours, the flask was heated to 40°C using an oil bath, and the volatile fraction was removed by distillation under reduced pressure, yielding 7.57 g of a colorless transparent liquid. The structure of the compound represented by the structural formula (Y2) (difluorodiphenylsilane) was determined by NMR. Further, the ²⁹Si NMR spectrum of this compound is shown in FIG. 3.

¹H NMR (300 MHz, acetone-d₆) δ = 7.83 to 7.25 (m, 10H). ¹³C NMR (75 MHz, acetone-d₆) δ = 135.95, 135.92, 135.90, 134.02, 130.20. ²⁹Si NMR (60 MHz, acetone-d₆) δ = -29.12 (t). ¹⁹F NMR (282 MHz, acetone-d₆) δ = -143.29.

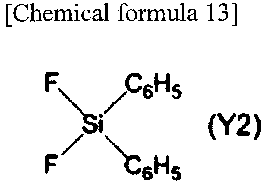

### (Synthesis of Compound Represented by Structural Formula (Z2))

A 50 mL two-neck flask was fitted with a nitrogen inlet, the flask was charged with 0.709 g of the compound represented by the above structural formula (X), and the atmosphere inside the flask was flushed with nitrogen. When 20 mL of tetrahydrofuran was added and stirred, a white suspension was obtained. The flask was then cooled to 0°C in an ice bath. A separate 50 mL two-neck flask was fitted with a septum rubber and a nitrogen inlet, the flask was charged with 0.28 g of the compound represented by the above structural formula (Y2), and the atmosphere inside the flask was flushed with nitrogen. When 10 mL of tetrahydrofuran was added and stirred, a colorless transparent solution was obtained. This solution was extracted using a syringe, and added gradually to the white suspension mentioned above. Stirring was then continued for one hour at 0°C, and when the ice bath was then removed and stirring was continued until the temperature gradually returned to room temperature, a transparent solution was obtained. This solution was transferred to a round-bottom flask, the solvent was removed by distillation using a rotary evaporator, and drying was then performed under reduced pressure using an oil pump, thus obtaining 0.84 g of a white solid.

This white solid was a compound represented by structural formula (Z2), and the structure of this compound represented by structural formula (Z2) was determined by NMR. Further, the ²⁹Si NMR spectrum of this compound is shown in FIG. 4.

¹H NMR (300 MHz, CDC13) δ = 7.83 to 7.14 (m, 60 H). ¹³C NMR (75 MHz, CDCl₃) δ = 134.57, 134.25, 134.09. 134.10. 131.54, 130.48, 130.40, 130.19, 130.10, 127.80, 127.77, 127.39. ²⁹Si NMR (60 MHz, CDCl₃) δ = -45.29, -77.99, -79.25.

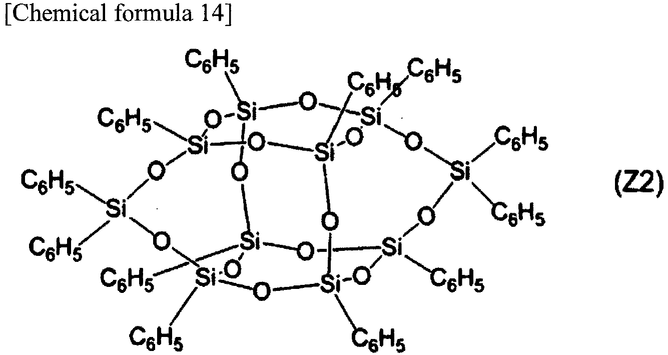

### [Synthesis of Compound Represented by Structural Formula (Z3)]

### (Synthesis of Compound Represented by Structural Formula (Y3))

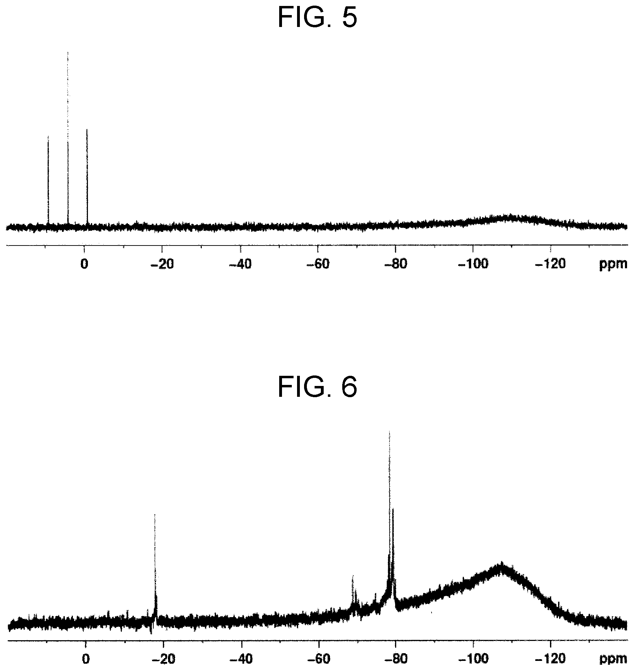

A 50 mL round-bottom flask was charged with 1.15 g of 3-methacryloxypropylmethyldimethoxysilane (KBE502, manufactured by Shin-Etsu Chemical Co., Ltd.) and 1.46 g of trifluoroborane diethyl ether complex (manufactured by Wako Pure Chemical Industries, Ltd.), and the mixture was stirred with a magnetic stirrer. After stirring for 24 hours, the flask was heated to 40°C using an oil bath, and the volatile fraction was removed by distillation under reduced pressure, yielding 0.72 g of a colorless transparent liquid. The structure of the compound represented by the structural formula (Y3) was determined by NMR. Further, the ²⁹Si NMR spectrum of this compound is shown in FIG. 5.

¹H NMR (300 MHz, acetone-d₆) δ = 6.11 (m, 1H), 5.66 (t, 1H), 4.17 (t, 2H), 1.95 (m, 3H), 1.87 (m, 2H), 0.98 (m, 2H), 0.43 (t, 3H). ¹³C NMR (75 MHz, acetone-d₆) δ = 166.96, 137.03, 125.00, 66.14, 21.21, 17.92, 9.58, -5.10. ²⁹Si NMR (60 MHz, acetone-d₆) δ = 4.13 (t). ¹⁹F NMR (282 MHz, acetone-d₆) δ = -136.69.

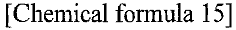

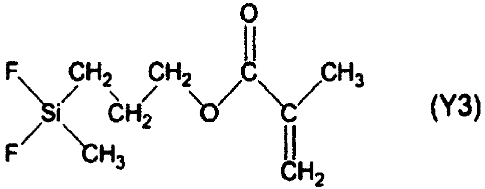

### (Synthesis of Compound Represented by Structural Formula (Z3))

A 50 mL two-neck flask was fitted with a nitrogen inlet, the flask was charged with 0.706 g of the compound represented by the above structural formula (X), and the atmosphere inside the flask was flushed with nitrogen. When 20 mL of tetrahydrofuran was added and stirred, a white suspension was obtained. The flask was then cooled to 0°C in an ice bath. A separate 50 mL two-neck flask was fitted with a septum rubber and a nitrogen inlet, the flask was charged with 0.28 g of the compound represented by the above structural formula (Y3), and the atmosphere inside the flask was flushed with nitrogen. When 10 mL of tetrahydrofuran was added and stirred, a colorless transparent solution was obtained. This solution was extracted using a syringe, and added gradually to the white suspension mentioned above. Stirring was then continued for one hour at 0°C, and when the ice bath was then removed and stirring was continued until the temperature gradually returned to room temperature, a transparent solution was obtained. This solution was transferred to a round-bottom flask, the solvent was removed by distillation using a rotary evaporator, and drying was then performed under reduced pressure using an oil pump, thus obtaining 0.44 g of a white solid.

This white solid was composed of compounds represented by structural formulas (Z3a) and (Z3b), and the structures of these compounds represented by structural formulas (Z3a) and (Z3b) were determined by NMR. Further, the ²⁹Si NMR spectrum of these compounds is shown in FIG. 6.

¹H NMR (300 MHz, CDCl₃) δ = 7.80 to 7.10 (m, 40H), 5.97 (m, 2H), 5.44 (t, 2H), 4.00 (m, 4H), 1.85 (m, 6H), 1.62 (m, 4H), 0.75 (m, 4H), 0.32 (t, 6H). ¹³C NMR (75 MHz, CDCl₃) δ = 167.34, 136.28, 134.17, 133.92, 133.82, 133.76, 131.79, 130.37, 127.77, 127.73, 127.64, 125.11, 66.11, 21.30, 18.16, 12.80, -0.99. ²⁹Si NMR (60 MHz, CDCl₃) δ = -17.87, -78.43, -79.39, -79.42, -79.87.

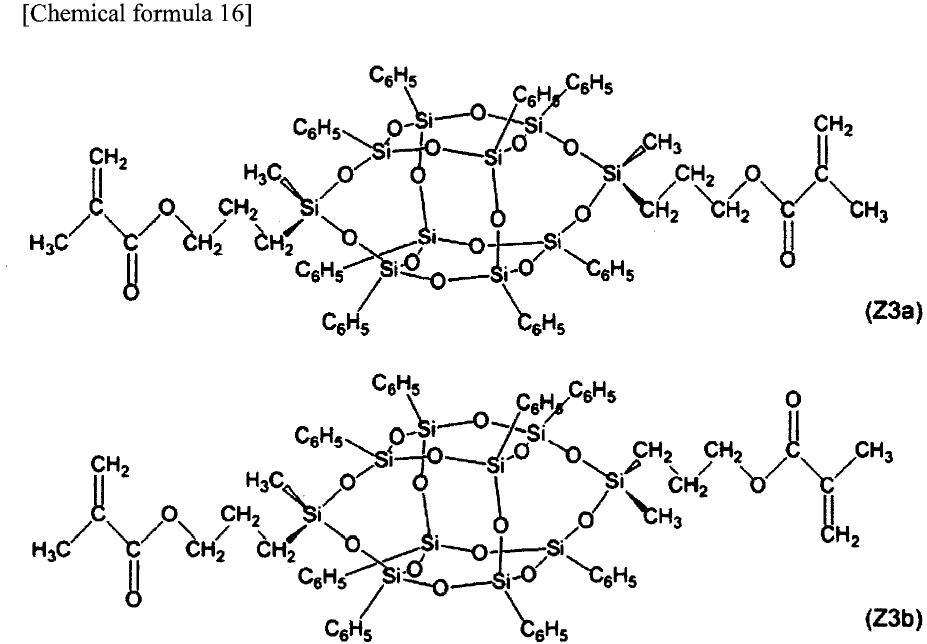

### [Synthesis of Compound Represented by Structural Formula (Z4)]

### (Synthesis of Compound Represented by Structural Formula (Y4))

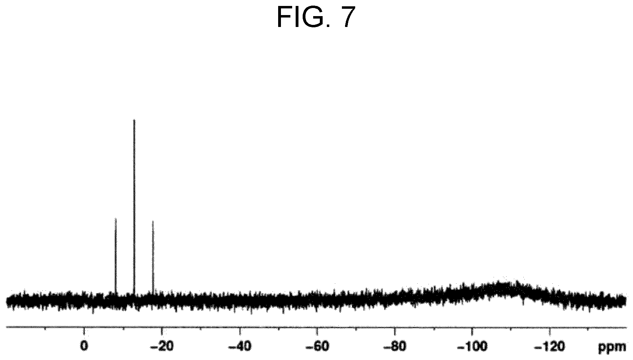

A 50 mL round-bottom flask was charged with 5.00 g of dimethoxymethylvinylsilane (manufactured by Tokyo Chemical Industry Co., Ltd.) and 3.57 g of trifluoroborane diethyl ether complex (manufactured by Wako Pure Chemical Industries, Ltd.), and the mixture was stirred for 24 hours with a magnetic stirrer, thus obtaining 8.57 g of a colorless transparent liquid. The mass ratio of the compound represented by the structural formula (Y4) was 47.7%, and the structure of the compound was determined by NMR. Further, the ²⁹Si NMR spectrum of this compound is shown in FIG. 7.

¹H NMR (300 MHz, CDCl₃) δ = 6.25 to 5.90 (m, 3H), 0.36 (t, 3H). ¹³C NMR (75 MHz, CDCl₃) δ = 138.67, 129.42, -5.21. ²⁹Si NMR (60 MHz, CDCl₃) δ = -12.88 (t). ¹⁹F NMR (282 MHz, CDCl₃) δ = -137.34.

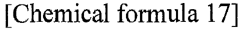

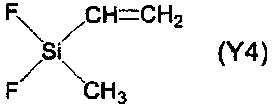

### (Synthesis of Compound Represented by Structural Formula (Z4))

A 50 mL two-neck flask was fitted with a nitrogen inlet, the flask was charged with 2.002 g of the compound represented by the above structural formula (X), and the atmosphere inside the flask was flushed with nitrogen. When 20 mL of tetrahydrofuran was added and stirred, a white suspension was obtained. The flask was then cooled to 0°C in an ice bath. Next, 0.730 g of the colorless transparent liquid containing 47.7% of the compound represented by the above structural formula (Y4) was added gradually. Stirring was continued for 30 minutes at 0°C, and the ice bath was then removed and stirring was continued until the temperature gradually returned to room temperature. The resulting solution was transferred to a round-bottom flask, the solvent was removed by distillation using a rotary evaporator, and drying was then performed under reduced pressure using an oil pump, thus obtaining 2.80 g of a white solid. Next, 10 mL of ethyl acetate was added, and following removal of the insoluble material by centrifugal separation, the solution was transferred to a round-bottom flask, the solvent was removed by distillation using a rotary evaporator, and drying was then performed under reduced pressure using an oil pump, yielding a white solid. Following washing with methanol, the solid was dried under reduced pressure using an oil pump, thus obtaining 0.68 g of a white solid.

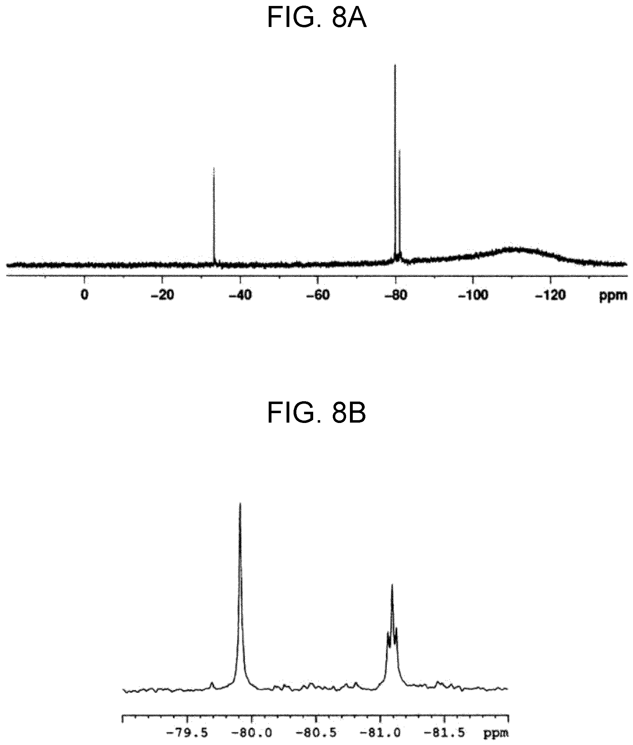

This white solid was composed of compounds represented by structural formulas (Z4a) and (Z4b), and the structures of these compounds represented by structural formulas (Z4a) and (Z4b) were determined by NMR. Further, the ²⁹Si NMR spectrum of these compounds is shown in FIG. 8.

¹H NMR (300 MHz, tetrahydrofuran-d₈) δ = 7.80 to 7.20 (m, 40H), 6.42 to 6.05 (m, 6H), 0.51 (s, 6H). ¹³C NMR (75 MHz, tetrahydrofuran-d₈) δ = 137.07, 135.78, 135.72, 135.71, 135.69, 135.63, 133.61, 132.18, 132.14, 129.53, 129.39, 129.35, 129.30, -0.19. ²⁹Si NMR (60 MHz, tetrahydrofuran-d₈) δ = -33.26, -79.92, -81.06, -81.10, -81.13.

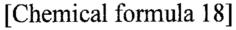

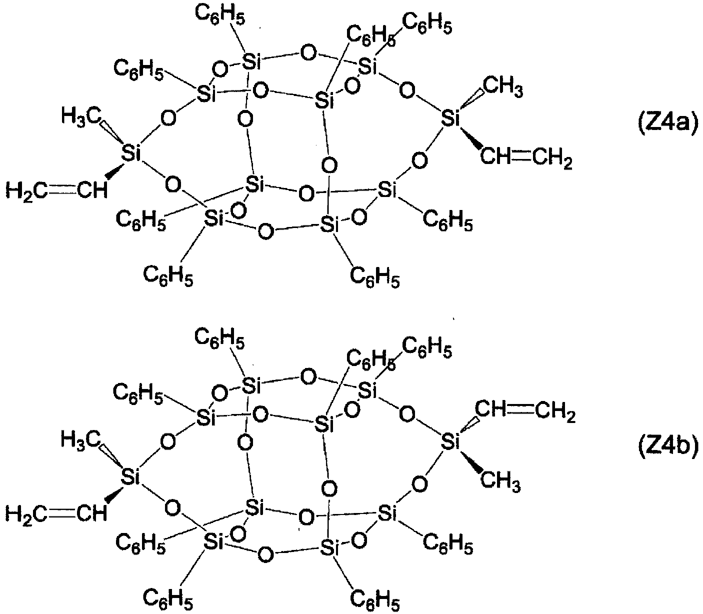

## Claims

1. A method for manufacturing a silsesquioxane compound represented by general formula (III) shown below, the method comprising a step of reacting a compound represented by general formula (I) shown below and a compound represented by general formula (II) shown below: 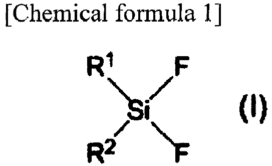 wherein each of R¹ and R² independently represents a hydrogen atom, an alkyl group of 1 to 8 carbon atoms, an aryl group of 6 to 14 carbon atoms, an aminoalkyl group, an amino group-containing group, a nitrile group-containing group, a vinyl group-containing group,
a (meth)acryloyl group-containing group, a chloro group-containing group, a bromo group-containing group, or a functional group containing a boron trifluoride-complexed amino group, 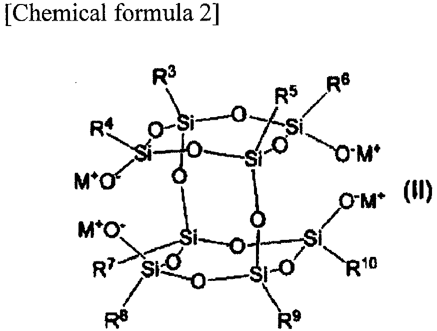 wherein each of R³ to R¹⁰ independently represents an alkyl group of 1 to 8 carbon atoms or an aryl group of 6 to 14 carbon atoms, and M represents at least one element selected from the group consisting of hydrogen, lithium, sodium and potassium, 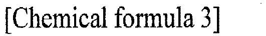 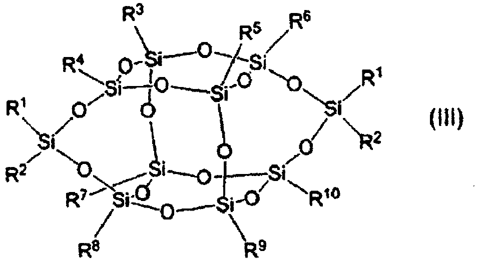 wherein each of R¹ and R² independently represents a hydrogen atom, an alkyl group of 1 to 8 carbon atoms, an aryl group of 6 to 14 carbon atoms, an aminoalkyl group, an amino group-containing group, a nitrile group-containing group, a vinyl group-containing group, a (meth)acryloyl group-containing group, a chloro group-containing group, a bromo group-containing group, or a functional group containing a boron trifluoride-complexed amino group, and each of R³ to R¹⁰ independently represents an alkyl group of 1 to 8 carbon atoms or an aryl group of 6 to 14 carbon atoms.

2. The method for manufacturing a silsesquioxane according to Claim 1, comprising a step of manufacturing the compound represented by the general formula (I) using a compound represented by general formula (IV) shown below: 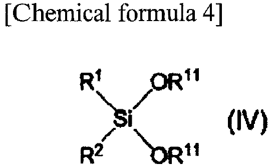 wherein each of R¹ and R² is independently the same as defined for general formula (I), and R¹¹ represents an alkyl group of 1 to 8 carbon atoms.

3. The method for manufacturing a silsesquioxane according to Claim 1 or 2, wherein in the general formula (II), M represents at least one element selected from the group consisting of lithium, sodium and potassium.

4. The method for manufacturing a silsesquioxane according to any one of Claims 1 to 3, wherein in the general formula (I), each of R¹ and R² independently represents an alkyl group of 1 to 8 carbon atoms, an aminoalkyl group, or a functional group containing a boron trifluoride-complexed amino group, and at least one of R¹ and R² is an aminoalkyl group or a functional group containing a boron trifluoride-complexed amino group.

5. The method for manufacturing a silsesquioxane according to Claim 4, wherein in the general formula (I), at least one of R¹ and R² is a 3-aminopropyl group, an N-2-(aminoethyl)-3-aminopropyl group, an N-phenyl-3-aminopropyl group, or a functional group containing a boron trifluoride-complexed amino group.

6. The method for manufacturing a silsesquioxane according to any one of Claims 1 to 5, wherein in the general formula (II), R³ to R¹⁰ are aryl groups of 6 to 8 carbon atoms.
